Europäisches Patentamt

**European Patent Office**

Office européen des brevets

(19)

(11) Numéro de publication: **0 195 735**
**B1**

(12) **FASCICULE DE BREVET EUROPEEN**

(45) Date de publication du fascicule du brevet:
**27.12.89**

(51) Int. Cl.⁴: **G01N 3/08**

(21) Numéro de dépôt: **86440015.5**

(22) Date de dépôt: **14.02.86**

(54) **Machine pour essais de traction d'éprouvettes métalliques en milieu fermé.**

(30) Priorité: **21.02.85 FR 8502780**

(43) Date de publication de la demande:
**24.09.86 Bulletin 86/39**

(45) Mention de la délivrance du brevet:
**27.12.89 Bulletin 89/52**

(84) Etats contractants désignés:
**AT BE CH DE GB IT LI LU NL SE**

(56) Documents cités:
**FR-A- 1 316 591**
**FR-A- 2 346 709**
**FR-A- 2 366 558**
**FR-A- 2 368 704**

(73) Titulaire: **INSTITUT DE RECHERCHES DE LA SIDERURGIE FRANCAISE (IRSID), Voie Romaine B.P. 64, F-57210 Maizières-lès-Metz(FR)**

(72) Inventeur: **Giraud, André, Tiranges, F-43130 - Retournac(FR)**
Inventeur: **Margot-Marette, Hélène, 35, rue de la Croix de Fer, F-78100 - Saint-Germain-en-Laye(FR)**
Inventeur: **Thevenin, Claude, 11, rue de la Mare aux Chats, Morainvilliers F-78630 - Orgeval(FR)**

(74) Mandataire: **Ventavoli, Roger et al, INSTITUT DE RECHERCHES DE LA SIDERURGIE FRANCAISE (IRSID) Station d'Essais Boîte Postale 64, F-57210 Maizières-lès-Metz(FR)**

## Description

La présente invention est relative à une machine de traction d'éprouvettes métalliques calibrées, placées dans un milieu fermé de composition déterminée, notamment dans un milieu corrosif.

Les essais de traction, comme on le sait, constituent une méthode classique de détermination de la résistance à la traction d'un matériau. Dans le but de caractériser le comportement mécanique et chimique des matériaux placés dans un environnement donée, il est connu de pratiquer des essais de traction sur des matériaux disposés dans un milieu "agressif" de référence.

L'association d'une contrainte de traction à une attaque chimique accélère la dégradation des pièces métalliques, le plus souvent par rupture du film de passivation, ce qui facilite alors les phénomènes électrochimiques de corrosion.

On connaît à l'heure actuelle différentes machines de traction, mais elles sont d'un emploi malaisé dès qu'il s'agit d'étudier la corrosion sous contrainte d'un métal.

En effet, la nécessité de travailler dans un milieu corrosif clos complique la prise des mesures, en particulier celles de l'allongement réel de l'éprouvette car il est bien entendu nécessaire de compenser, d'une manière ou d'une autre, les variations parasites de longueur des éléments sous contraintes de la machine elle-même.

Dans le cas d'essais classiques de traction pure, il est connu d'effectuer avant chaque essai, le marquage de l'éprouvette par deux repères à une distance "l" déterminée. A la fin de l'essai, qui est généralement conduit jusqu'à la rupture de l'éprouvette, il suffit de rapprocher les deux morceaux obtenus et de mesurer le nouvel écart entre les deux repères pour obtenir l'allongement réel de l'éprouvette.

Cette façon d'opérer n'est bien entendu pas utilisable dans le cas où l'on travaille dans un milieu corrosif. En effet, le marquage de l'eprouvette, qui est généralement fait au moyen d'entailles, constitue des zones préférentielles d'amorçage des fissures par l'action conjuguée de concentration de contraintes et de réactions électrochimiques.

De même, la méthode utilisant un capteur à lames n'est pas utilisable dans le cas d'une éprouvette soumise à la fois à une traction et à un milieu corrosif, simplement parce que le capteur à lames, qui doit être en contact direct avec l'éprouvette, serait exposé au milieu corrosif, et subirait également une dégradation par corrosion.

La demande de brevet français FR-A 2 368 704 présente un appareil d'examen d'éprouvettes métalliques permettant de mesurer l'allongement d'un échantillon plongé dans un milieu maintenu à une température contrôlée. La mesure de l'allongement est réalisée par des moyens extérieurs à ce milieu, comportant notamment un capteur de mesure placé dans l'axe de traction. Une telle disposition complique la construction de l'appareil, qui, par ailleurs, n'est pas adapté au maintien de l'échantillon dans un milieu corrosif.

La présente invention a pour but de permettre la prise en continu de l'allongement réel de l'éprouvette métallique soumise à la fois à une contrainte de traction et à l'action d'un milieu corrosif, au moyen d'une machine dont l'axe de traction n'est pas encobré par les moyens de mesure de l'allongement de l'éprouvette.

A cet effet, l'invention a pour objet une machine de traction chargée d'effectuer des essais sous contrainte sur une éprouvette métallique calibrée, plongée dans un milieu corrosif clos, comprenant: un bâti; deux têtes d'amarrage alignées selon l'axe de traction et espacées pour la fixation de l'éprouvette par ses extrémités; un dispositif moteur pour la mise en traction de l'une des têtes d'amarrage, dite "tête d'amarrage active", tandis que l'autre tête d'amarrage, dite "tête d'amarrage passive", est reliée au bâti de la machine; une ampoule étanche contenant le milieu corrosif et traversée par les têtes d'amarrage, et des moyens capables de suivre en continu et de transmettre l'allongement de l'éprouvette à un capteur d'allongement placé à l'extérieur du milieu corrosif clos, moyens constitués essentiellement de deux tiges, choisies en un matériau insensible à la température et au milieu corrosif, l'une des tiges, dite "de référence", traversant l'ampoule afin de plonger en partie dans le milieu corrosif de telle façon que son extrémité, qui est dans le milieu corrosif, soit au contact de la tête d'amarrage passive et que son extrémité, située à l'extérieur du milieu corrosif, soit solidaire du capteur d'allongement, l'autre tige, dite "de mesure" étant logée dans un canal ménagé longitudinalement dans la tête d'amarrage active, de manière que l'une des extrémités de cette tige de mesure soit au contact de l'éprouvette, tandis que son extrémité libre est reliée au capteur d'allongement afin de lui transmettre l'allongement de l'éprouvette mise en traction, ledit canal étant prévu pour permettre le libre positionnement de la tige de mesure, machine de traction caractérisée en ce que le capteur d'allongement est placé en position décalée latéralement par rapport à l'axe de traction, et en ce que l'extrémité libre de la tige de mesure est mise en communication mécanique avec le capteur par un organe de renvoi qui lui est solidaire et présentant un doigt engagé dans ledit capteur pour la transmission du déplacement longitudinal de la tige de mesure lors de l'allongement de l'éprouvette.

Conformément à un mode de réalisation de l'invention, la machine de traction est verticale, c'est-à-dire que les têtes d'amarrage et l'éprouvette sont verticales.

Conformément à une variante préférée du mode de réalisation précité, la tête d'amarrage active est la tête d'amarrage supérieure.

Comme on le comprend, les deux tiges constituent un intermédiaire avantageux entre l'éprouvette et le capteur d'allongement réel de l'éprouvette.

D'une part, la tige de mesure, qui est en relation à la fois avec l'éprouvette et avec le capteur d'allongement, assure le suivi de la déformation de l'éprouvette pendant toute la période des essais et la transmission de cette déformation au capteur.

D'autre part, la tige de référence, qui comme son nom l'indique, constitue le point zéro de la mesure, communique au capteur d'allongement les déplacements de la tête d'amarrage passive, à savoir notamment ceux résultant de l'allongement de cette tête d'amarrage, qui est soumise comme l'éprouvette, à une contrainte de traction. De cette manière, il est possible d'éliminer de la mesure réalisée par le capteur de déplacement à l'aide de la tige de mesure, les éventuelles déformations de la tête d'amarrage passive.

Le capteur d'allongement est donc fixe par rapport à la tête d'amarrage passive, ce qui lui permet de déceler uniquement l'allongement de l'éprouvette.

Un autre avantage de l'invention résulte de la désolidarisation de la tige de mesure de la tête d'amarrage active, ce qui permet de s'affranchir, dans le suivi de l'allongement réel de l'éprouvette, des éventuelles déformations de cette tête d'amarrage ainsi que des mouvements de celle-ci dans le cas où elle ne serait pas correctement fixée à l'éprouvette.

L'invention sera bien comprise, et d'autres aspects et avantages ressortiront au vu de la description qui suit, donnée à titre d'exemple et en référence à la planche de dessins annexée sur laquelle :

- la figure 1 représente une vue en coupe verticale d'une machine de traction conforme à l'invention.
- la figure 2 est une vue agrandie du capteur d'allongement montré sur la figure 1.

Dans cet exemple, il s'agit d'étudier l'influence d'un milieu chloruré chaud sur des éprouvettes cylindriques en acier inoxydable, soumises à une traction, dite "lente", car réalisée à des vitesses comprises entre 10 et 10 mm/s, et d'établir pour différentes vitesses de traction les courbes d'"effort-allongement" à partir desquelles on peut déduire le comportement de l'acier vis à vis de la corrosion sous contrainte.

Pour ce faire, l'éprouvette en acier 1 est plongée dans une ampoule 2, en pyrex, remplie d'une solution aqueuse et chaude de chlorure de magnésium de concentration connue. Le maintien en température de cette solution s'effectue à l'aide d'un manchon chauffant 3 placé autour de l'ampoule 2 et régulé en température au moyen d'un thermocouple et d'un thryristor non représentés sur cette figure.

L'éprouvette 1 est maintenue en position sensiblement verticale entre deux têtes d'amarrage 4 et 5, respectivement supérieure et inférieure, alignées selon l'axe de traction A et espacées entre elles pour permettre la mise en place de l'éprouvette 1.

Un ensemble de traction 6, comprenant principalement un écrou tournant 7 et une vis sans fin de traction 8, actionné par un motoréducteur 9, établit la mise en traction de l'éprouvette 1 par l'intermédiaire de la tête d'amarrage active 4, qui est fixée par son extrémité supérieure à la vis de traction 8.

A l'opposé, l'extrémité inférieure de la tête d'amarrage passive 5 est solidaire du plancher 10 du bâti de la machinede traction.

Le bâti de la machine exemplifié comprend également des colonnes verticales 33, fixées entre le plancher 10 et la plaque de voûte 34 sur laquelle est fixé l'ensemble de traction 6. Une ouverture ménagée dans la plaque de voûte 34, dans laquelle l'écrou 7 repose sur une butée à bille 44, garantit le passage sans frottement de la vis de traction 8.

Dans le but d'empêcher la torsion de l'éprouvette 1 que l'on peut craindre en raison des vitesses très lentes de traction utilisées, on prévoit un moyen capable de s'opposer à la rotation éventuelle de la vis de traction 8. Dans l'exemple décrit, il s'agit d'une clavette transversale 35, fixée par sa partie centrale évidée à la vis de traction 8 et dont les bras de part et d'autre de cette vis sont évidés à leur extrémité afin de pouvoir coulisser librement autour des colonnes 33 du bâti de la machine.

Par ailleurs, dans le but de garantir en toutes circonstances une contrainte de traction pure de l'éprouvette, c'est-à-dire n'ayant qu'une composante dans le sens longitudinal, on prévoit une fixation articulée de la tête d'amarrage passive 5 dans le plancher 10 du bâti permettant d'obtenir l'autoalignement des têtes d'amarrage active 4 et passive 5.

Plus précisément, une ouverture est ménagée dans le plancher 10 du bâti de la machine de traction, pour le passage de la partie terminale de la tête d'amarrage passive 5, qui est fixée, sous le plancher 10, dans un articulation à rotule 36.

L'ampoule 2 est équipée d'un condenseur 11 qui n'a été représenté qu'en partie sur la figure afin de ne pas la surcharger inutilement. De la sorte, on maintient la pression dans l'ampoule 2 à la pression atmosphérique et la composition initiale de la solution est conservée.

La fermeture du fond de l'ampoule 2, qui s'effectue autour de la tête d'amarrage passive 5, est réalisée à l'aide d'une bride 12 en matière plastique de dénomination commerciale "SOVIREL", qui assure également la fixation de l'ampoule 2 autour de cette tête d'amarrage. Un joint 13 placé à l'extrémité de l'ampoule 2 dans la bride 12 complète l'étanchéité du fond de l'ampoule 2.

A cet endroit, un étui rigide 14, monté autour de la tête d'amarrage passive 5, comportant une collerette 15 rapportée contre la bride 12 et prenant assise par son pied 16 sur le plancher 10 du bâti de la machine, assure le maintien de l'ampoule 2 dans une position fixe, en particulier après la rupture de l'éprouvette 1.

Un couvercle 17, fixé contre les bords supérieurs de l'ampoule 2 au moyen des étriers 45, et percé d'ouvertures pour le passage notamment de la tête d'amarrage active 4, constitue la fermeture supérieure de l'ampoule 2.

Dans le but d'empêcher la corrosion et le couplage galvanique des têtes d'amarrage 4 et 5, qui sont en partie plongées dans la solution corrosive, ces dernières sont enveloppées dans une gaine en matériau isolant électrique et résistant à la corrosion, constituée d'un matériau à base de polymère fluoré.

De plus, on prévoit aux extrémités des têtes d'amarrage entre lesquelles est fixée l'éprouvette 1, une isolation électrique 18 capable de contrecarrer les effets de pile qui pourraient naître entre le métal de la tête d'amarrage et le métal constituant l'éprouvette.

L'isolation électrique de l'éprouvette 1 est complétée à l'aide des isolants 46 placés entre la vis de traction 8 et la tête d'amarrage active 4, par des isolants 47 placés sous le plancher 10 entre ce dernier et l'articulation à rotule 36 et par des canons isolants 48 entourant les moyens prévus pour fixer notamment l'articulation à rotule 36 au plancher 10, qui seront décrits précisément dans la suite de cet exposé.

Conformément à l'invention, la machine de traction exemplifiée comporte deux tiges parallèles entre elles : une tige 19 dite "de référence" plongée en grande partie dans la solution corrosive, et une tige 20 dite "de mesure" qui est logée dans un canal axial 21 ménagé dans la tête d'amarrage active 4, pour le libre positionnement de la tige 20 sur l'éprouvette 1. Les deux tiges 19 et 20, qui sont ici cylindriques, sont choisies en silice en raison de l'insensibilité de ce matériau aux milieux corrosifs et à la température.

La tige de référence 19 est maintenue en position fixe par rapport à la tête d'amarrage passive 5, son extrémité inférieure, reposant sur un palier 22, fixée à la tête d'amarrage passive 5 le plus près possible de l'extrémité supérieure de cette tête. A l'opposé, sur son extrémité supérieure est fixée une pièce support 27 sur laquelle est posé le capteur d'allongement 23 qui sera décrit de façon précise dans la suite de cet exposé. La tige de référence 19 constitue donc le "zéro flottant" du capteur d'allongement 23, c'est-à-dire qu'elle permet à ce dernier d'ignorer, dans la mesure de l'allongement réel de l'éprouvette 1, les déplacements de la tête d'amarrage passive 5, notamment ceux résultant de l'allongement de cette dernière.

Comme précisé auparavant, la tige 20 de mesure est en contact par son extrémité inférieure avec l'extrémité supérieure de l'éprouvette 1. Le contact entre ces deux pièces s'établit avantageusement selon une surface conique qui entretient un positionnement stable de la tige 20 sur l'éprouvette 1.

Dans le but de ne pas encombrer la zone proche de la tête d'amarrage active 4 sur l'axe de traction (A), il est prévu un organe de renvoi 24 reliant la tige de mesure au capteur d'allongement 23 décalé à cet effet sur le côté. Dans l'exemple décrit, ce décalage est le même que celui de la tige de référence 19, de sorte que le capteur 23 se trouve être monté dans le prolongement supérieur de cette tige. Cet organe de renvoi 24 est solidarisé à la tige de mesure par engagement de l'extrémité supérieure de celle-ci dans une encoche 25 de l'organe 24, ce qui lui permet de suivre fidèlement en translation les moindres déplacements de la tige de mesure 20 occasionnés par l'allongement de l'éprouvette 1 et de les communiquer au capteur 23 grâce à son doigt palpeur 28 qui s'engage dans le capteur.

D'autre part, une lumière 26 est pratiquée dans la tête d'amarrage active 4, pour le passage sans frottement du palpeur 24. De la sorte, l'organe de renvoi 24 est, comme la tige de mesure 20, désolidarisé de la tête d'amarrage active 4, ce qui permet dans le suivi de l'allongement réel de l'éprouvette 1, de ne pas ressentir les éventuelles déformations de cette tête d'amarrage, ou ces déplacements dans le cas où elle ne serait pas correctement fixée avec l'éprouvette 1.

Le capteur d'allongement 23 concerné est ici un capteur inductif à noyau mobile composé essentiellement d'une bobine d'induction verticale 29 dans laquelle est disposé, selon l'axe de la bobine, un noyau 30 en fer doux dont l'extrémité inférieure repose sur le doigt 28 de l'organe de renvoi 24.

La machine de traction exemplifiée comprend également des moyens de réglage du zéro électrique du capteur inductif 23 que l'on effectue généralement avant le démarrage de l'essai.

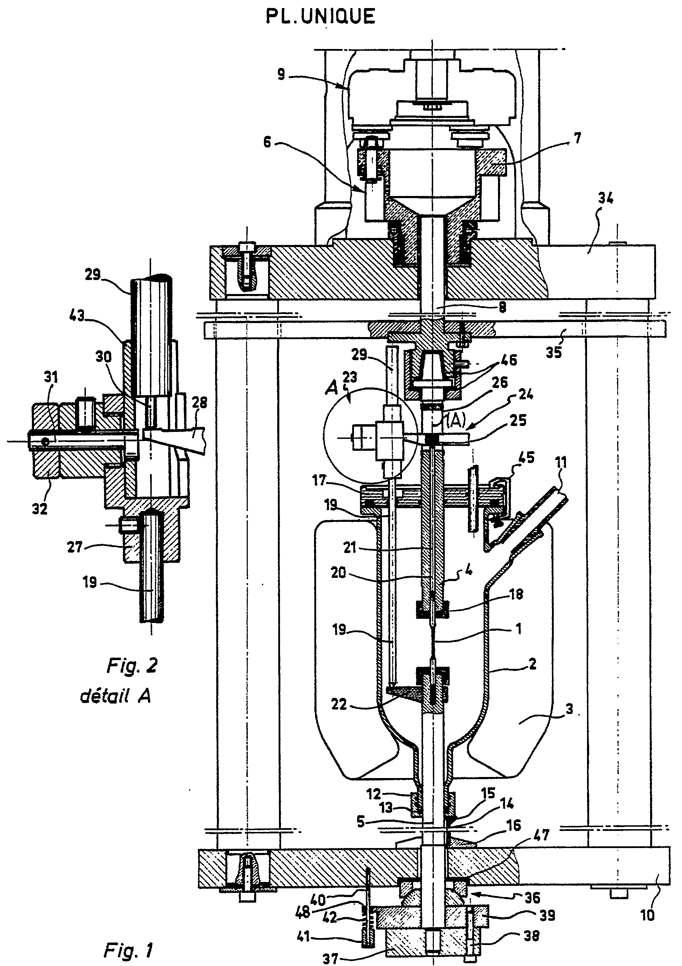

Comme on peut le voir sur la figure 2, qui est un agrandissement du capteur d'allongement 23, le réglage du zéro est réalisé en modifiant la position du noyau 30 dans la bobine 29.

Dans l'exemple présenté ci-dessus, ce réglage s'effectue en modifiant en hauteur la position de la bobine 29.

Ce réglage s'effectue à l'aide d'une came 31 dont la tige cylindrique est actionnée en rotation à l'aide d'une molette 32 et dont la partie terminale, également cylindrique mais décentrée par rapport à la tige, s'engage dans une ouverture pratiquée dans un fourreau 43, ce dernier étant, par ailleurs, serré autour de la partie inférieure de la bobine 29 qu'il maintient en position verticale. Le fourreau 43 comporte une seconde ouverture dans laquelle s'engage le doigt 28 de l'organe de renvoi 24, cette seconde ouverture étant suffisamment large afin de ne pas gêner les mouvements de cet organe.

Après réglage, le fourreau 43 est maintenu en position fixe sur la pièce support 27, ce qui rend la bobine 29 fixe par rapport à la tête d'amarrage passive 5, comme l'est également le noyau inductif 30, qui est au contact du renvoi 24.

En conséquence, la bobine 29 n'est sensible qu'au déplacement du noyau occasionné par l'allongement de l'éprouvette 1.

Un montage électrique, non représenté sur la figure, dans lequel est intégrée la bobine 29, permet de détecter et de quantifier les déplacements du noyau 30 dans cette dernière, par exemple en mesurant la différence de potentiel aux bornes de la bobine 29.

La machine de traction exemplifiée est équipée d'instruments de mesures, dont celle de la charge imposée à l'éprouvette 1 par l'ensemble de traction 6. Cette mesure est effectuée par un capteur de force 37 dans lequel est fixée par vissage la partie terminale de la tête d'amarrage passive 5.

De façon avantageuse, la machine de traction exemplifiée comprend également un dispositif éliminant tout risque de mise sous contrainte de l'éprouvette avant le début de l'essai. Pour ce faire, le capteur 37 est fixé à l'aide de vis 38 à une plaque porte-capteur 39, qui est elle-même fixée au plancher 10 au moyen d'une fixation élastique, composée des tiges filetées 40, des écrous 41 et des ressorts de compression 42 qui sont montés autour des tiges filetées 40, entre le porte-capteur 39 et les écrous 41.

Ainsi, en se comprimant sous le poids notamment du porte-capteur 39 et du capteur de charge 37, les ressorts 42 permettent à l'éprouvette 1 de ne pas ressentir le poids de ces pièces.

De plus, les ressorts 42 garantissent la mobilité de l'articulation à rotule 36 et de ce fait favorisent l'autoalignement des tête d'amarrage 4 et 5.

Grâce à montage, il n'est pas nécessaire de serrer étroitement le porte-capteur 39 contre l'articulation à rotule 36 si l'on ne veut pas introduire avant l'essai de contraintes dans l'éprouvette 1.

En effet, au début de la mise en marche de la machine de traction, la simple venue en butée du porte-capteur 39 contre l'articulation 36 constituera le point de départ de la mise en traction de l'éprouvette 1. Comme précisé auparavant, le déplacement de la tête d'amarrage passive 5, pendant cette mise en butée, ne sera pas décelé par le capteur d'allongement 23.

Bien entendu, l'invention n'est pas limitée au mode de réalisation décrit ci-dessus, mais s'étend à de multiples variantes ou équivalents dans la mesure où sont respectées les caractéristiques énoncées dans les revendications jointes.

Il en est ainsi, par exemple, de la forme des tiges de mesure et de référence, 20 et 19, qui, dans l'exemple présenté ci-dessus, est cylindrique, et que l'on peut prévoir, par exemple, de section carrée.

Par ailleurs, on peut songer à établir le contact entre l'éprouvette et la tige de mesure selon une surface plane.

En ce qui concerne le palpeur, l'invention n'est pas non plus limitée au mode de réalisation exemplifié.

On peut notamment prévoir un organe de renvoi du type "à levier", à axe d'articulation fixe situé à l'extrémité opposée de celle du doigt 28 au contact avec le capteur d'allongement.

De la sorte, l'amplitude du mouvement du doigt 28 devient bien supérieure à celle du déplacement longitudinal de la tige de mesure, permettant ainsi de bénéficier d'une meilleure sensibilité dans la détection de l'allongement de l'éprouvette.

**Revendications**

1. Machine de traction chargée d'effectuer des essais sous contrainte sur une éprouvette métallique calibrée, plongée dans un milieu corrosif clos, comprenant un bâti, deux têtes d'amarrage alignée selon l'axe de traction et espacées pour la fixation de l'éprouvette par ses extrémités, un dispositif monteur pour la mise en traction de l'une des têtes d'amarrage, dite "tête d'amarrage active", tandis que l'autre tête d'amarrage, dite "tête d'amarrage passive", est reliée au bâti de la machine, une ampoule étanche contenant le milieu corrosif et traversé par les têtes d'amarrage et des moyens capables de suivre en continu et de transmettre l'allongement de l'éprouvette à un capteur d'allongement placé l'extérieur du milieu corrosif clos, moyens constitués essentiellement de deux tiges, choisies en un matériau insensible à la température et au milieu corrosif, l'une des tiges (19) dite "de référence", traversant l'ampoule (2) afin de plonger en partie dans le milieu corrosif de façon que son extrémité, qui est dans le milieu corrosif, soit au contact de la tête d'amarrage passive (5) et que son extrémité, située à l'extérieur du milieu corrosif, soit solidaire du capteur d'allongement (23), l'autre tige, dite "de mesure", étant logée dans un canal (21) ménagé longitudinalement dans la tête d'amarrage active (4), de manière que l'une des extrémités de cette tige de mesure (20), soit au contact de l'éprouvette (1), tandis que son extrémité libre communique avec le capteur d'allongement (23), ledit canal (21) étant prévu pour y permettre le libre positionnement de la tige de mesure (20), machine de traction caractérisée en ce que le capteur d'allongement (23) est placé en position décalée latéralement par rapport à l'axe de traction (A) et en ce que l'extrémité libre de la tige de mesure (20) est mise en communication mécanique avec le capteur (23) par un organe de renvoi (24) qui lui est solidaire et présentant un doigt (28) engagé dans ledit capteur pour la transmission du déplacement longitudinal de la tige de mesure lors de l'allongement de l'éprouvette.

2. Machine de traction selon la revendication 1 caractérisée en ce que le capteur de déplacement (23) est un capteur inductif à noyau mobile composé essentiellement d'une bobine d'induction (29) et d'un noyau inductif (30) monté coulissant axialement à l'intérieur de ladite bobine et actionné par le doigt (28) de l'organe de liaison (24).

3. Machine de traction selon la revendication 1 ou 2, caractérisée en ce qu'elle comprend également un dispositif chargé d'assurer l'alignement des têtes d'amarrage (4) et (5), ledit dispositif présentant une articulation à rotule (36) qui constitue la fixation souple de l'extrémité inférieure de la tête d'amarrage passive (5) dans le bâti de ladite machine.

4. Machine de traction selon l'une quelconque des revendications 1 à 3, caractérisée en ce que la tête d'amarrage passive (5) est pourvue d'un capteur de charge (37).

5. Machine de traction selon l'une quelconque des revendications 1 à 4, caractérisée en ce que le dispositif moteur (6) pour la mise en traction de l'éprouvette comprend un ensemble écrou tournant (7) – vis sans fin de traction (8), piloté par un motoréducteur (9), et une clavette transversale (35), solidaire de la vis de traction (8), et montée coulissante sur les colonnes (33) du bâti.

**Claims**

1. Tensioning machine for carrying out tensile stress tests on a calibrated metallic test piece immersed in a closed corrosive environment, comprising a frame, two anchoring heads aligned along the traction axis and spaced for the attachment of the test piece by its extremites, a drive for exerting traction on one of the anchoring heads, called "active anchoring head" whilst the other anchoring head, called "passive anchoring head" is connected to the frame of the machine, a hermetically closed flask to contain the corrosive medium which is traversed by the anchoring heads and means continuously following and for transmitting the elongation of the test piece to an elongation sensor located outside the closed corrosive environment, said means being constituted essentially by two rods, selected of a material inert to temperature and to the closed corrosive medium, one of said rods (19) call- de "reference rod" passing through the flask (2) to be partly immersed into the corrosive medium in such a manner, that its extremity situated within the corrosive medium be in contact with the passive anchoring head (5), whilst its other extremity, situated outside the corrosive medium, is fast with the elongation sensor (23), whilst the other rod, called "measuring rod", is lodged in a duct (21) formed longitudinally within the active anchoring head (4), in such a manner that one of the extremities of this measuring rod (20) is in contact with the test piece (1), whilst its free extremity communicates with the elongation sensor (23), the said duct (21) being designed to allow the free positioning of the measuring rod (20), said tensioning machine being characterised in that the elongation sensor (23) is located in a laterally offset position relative to traction axis (A) and in that the said free extremity of the measuring rod (20) is mechanically linked with the sensor by a reversing element (24) which is fast therewith and has a pawl (28) engaged in said sensor for transmitting thereto the longitudinal displacement of the measuring rod during the elongation of the test piece.

2. A tensioning machine according to Claim 1, characterised in that the displacement sensor (23) is an inductive sensor with a movable core composed essentially of an induction coil (29) and of an inductor core (30) mounted axially slidable in the interior of said coil and is actuated by the pawl (28) of the connector unit (24).

3. A tensioning machine according to Claim 1 or 2, characterised in that it also comprises a device having for function the alignment of the anchoring heads (4) and (5), the said device has a ball and socket articulation (36) which provides for the flexible attachment of the lower extremity of the passive anchoring head (5) to the frame of the said machine.

4. A tensioning machine according to any one of the preceding Claims 1 to 3, characterised in that the passive anchoring head (5) is provided with a load sensor (37).

5. A tensioning machine according to any one of Claims 1 to 4, characterised in that the driving means for subjecting the test piece to traction comprises an assembly formed by a rotating screw (7), an endless traction screw (8) governed by a speed reducer (9), and a transverse key (35) fast with the traction screw (8) and mounted slidably on the columns (33) of the frame.

**Patentansprüche**

1. Zugmaschine, die dazu bestimmt ist, Zugfestigkeitsprüfungen an einer kalibrierten Metallprobe durchzuführen, die in ein geschlossenes korridierendes Medium eingetaucht ist, umfassend einen Maschinenrahmen bzw. ein Gestell, zwei Halteköpfe, die entlang einer Zugachse ausgerichtet und im Abstand voneinander für die Befestigung der Probe an ihren Enden angeordnet sind, eine Antriebsvorrichtung, um eine Zugspannung an einen der Halteköpfe anzulegen, der als "aktiver Haltekopf" bezeichnet wird, während der andere Haltekopf, der als "passiver Haltekopf" bezeichnet wird, mit dem Rahmen der Maschine verbunden ist, einen dichten Behälter, der das korridierende Medium enthält und von den Halteköpfen und Einrichtungen durchsetzt ist, die fähig sind, der Verlängerung der Probe kontinuierlich zu folgen und die Verlängerung der Probe auf einen Verlängerungssensor zu übertragen, der außerhalb des geschlossenen korridierenden Mediums angeordnet ist, Einrichtungen, die im wesentlichen aus zwei Spindeln bzw. Schäften bestehen, die aus einem Material hergestellt sind, das unempfindlich gegenüber Temperaturen und dem korrodierenden Medium ist, wobei eine der Spindeln (19), die als "Bezugsspindel" bezeichnet wird, den Behälter (2) durchsetzt, um teilweise in das korrodierende Medium so eingetaucht zu werden, daß ihr im korrodierenden Medium befindliches Ende in Kontakt mit dem passiven Haltekopf (5) steht und ihr anderes Ende, das sich außerhalb des korrodierenden Mediums befindet, fest mit dem Verlängerungssensor (23) verbunden ist, wobei die andere Spindel, die als "Meßspindel" bezeichnet wird, in einem Kanal (21) untergebracht ist, der in Längsrichtung im aktiven Haltekopf (4) ausgebildet ist, sodaß eines der Enden dieser Meßspindel (20) in Kontakt mit der Probe (1) steht, während ihr freies Ende mit dem Verlängerungssensor (23) in Verbindung steht, wobei der genannte Kanal (21) vorgesehen ist, um darin die freie Positionierung der Meßspindel (20) zuzulassen und die Zugmaschine dadurch gekennzeichnet, daß der Verlängerungssensor (23) seitlich versetzt in bezug auf die Zugachse (A) positioniert ist und daß das freie Ende der Meßspindel (2) in mechanische Verbindung mit dem Sensor (23) mittels eines Umlenkorgans (24) gesetzt ist, das fest mit ihr verbunden ist und einen Finger (28) besitzt, der mit dem genannten Sensor für die Übertragung der Längsverschiebung der Meßspindel bei der Verlängerung der Probe in Eingriff steht.

2. Zugmaschine nach Anspruch 1, dadurch gekennzeichnet, daß der Verschiebungssensor (23) ein induktiver Sensor mit einem mobilen Kern ist, der im wesentlichen aus einer Induktionsspule (29) und einem Induktionskern (30) besteht, der axial gleitend im Inneren der genannten Spule angeordnet ist und vom Finger (28) des Verbindungsorganes (24) betätigbar ist.

3. Zugmaschine nach Anspruch 1 oder 2, dadurch gekennzeichnet, daß sie auch eine vorgespannte Vorrichtung umfaßt, die die Ausrichtung der Halteköpfe (4 und 5) gewährleistet, wobei diese Vorrichtung ein Kugelgelenklager (36) aufweist, das die nachgiebige Befestigung des unteren Endes des passiven Haltekopfes (5) im Rahmen der genannten Maschine darstellt.

4. Zugmaschine nach einem der Ansprüche 1 bis 3, dadurch gekennzeichnet, daß der passive Haltekopf (5) mit einem Kraft- bzw. Spannungssensor (37) versehen ist.

5. Zugmaschine nach einem der Ansprüche 1 bis 4, dadurch gekennzeichnet, daß die Antriebsvorrichtung (6) für das Beaufschlagen der Probe mit einer Zuspannung eine aus einer Drehmutter (7) und einer endlosen Zugschraubenschnecke (8) bestehende Einheit ist, die von einem Getriebemotor (9) gesteuert ist und einen Querkeil (35) aufweist, der fest mit der Zugschraubenschnecke (8) verbunden und gleitend auf den Ständern (33) des Maschinenrahmens montiert ist.

EP 0 195 735 B1

PL. UNIQUE

Fig. 2
détail A

Fig. 1